(19) **Europäisches Patentamt / European Patent Office / Office européen des brevets**

(11) **EP 3 321 141 B1**

(12) **EUROPEAN PATENT SPECIFICATION**

(45) Date of publication and mention
of the grant of the patent:
**25.09.2019 Bulletin 2019/39**

(51) Int Cl.:
***B60T 7/12*** *(2006.01)*   ***B62L 3/00*** *(2006.01)*
***B60T 8/17*** *(2006.01)*

(21) Application number: **16821191.0**

(22) Date of filing: **14.06.2016**

(86) International application number:
**PCT/JP2016/067681**

(87) International publication number:
**WO 2017/006721 (12.01.2017 Gazette 2017/02)**

(54) **CONTROL DEVICE FOR STRADDLED VEHICLE, AND STRADDLED VEHICLE**

STEUERUNGSVORRICHTUNG FÜR GRÄTSCHSITZFAHRZEUG SOWIE
GRÄTSCHSITZFAHRZEUG

DISPOSITIF DE COMMANDE POUR VÉHICULE À ENFOURCHER, ET VÉHICULE À ENFOURCHER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.07.2015 JP 2015136709**

(43) Date of publication of application:
**16.05.2018 Bulletin 2018/20**

(73) Proprietor: **Yamaha Hatsudoki Kabushiki Kaisha
Iwata-shi, Shizuoka 438-8501 (JP)**

(72) Inventor: **ARAI, Katsuhiro
Iwata-shi
Shizuoka 438-8501 (JP)**

(74) Representative: **Stöckeler, Ferdinand
Schoppe, Zimmermann, Stöckeler
Zinkler, Schenk & Partner mbB
Patentanwälte
Radlkoferstrasse 2
81373 München (DE)**

(56) References cited:
**DE-A1-102008 026 530    DE-A1-102008 026 531
JP-A- 2006 137 340      JP-A- 2010 524 762
JP-A- 2010 529 341**

**Description**

Technical Field

The present teaching relates to a control device for straddled vehicle, and to a straddled vehicle.

Background Art

Normally in starting on a hill, a driver simultaneously or sequentially operates a brake and an accelerator. Starting on a hill, in general, requires a relatively high driving skill. Not a few drivers find it difficult to start on a hill. As a system for aiding in a start on a hill, a hill start assist brake device that requires no brake operation is conventionally known.

Patent Literature 1 (PTL 1) discloses a hill start assist brake device for motorcycle, as an example of a conventional control device for straddled vehicle. The hill start assist brake device for motorcycle, at a time of a vehicle stopping, detects the stop of the vehicle, and detects deactivation of a driver's brake input. The brake device then calculates a total braking force of the vehicle at the time of deactivation of the driver's brake input. The brake device further calculates a braking force required for keeping the vehicle stopped. Then, the brake device determines whether or not the calculated total braking force is capable of keeping the vehicle stopped. Upon determination that it is not capable of keeping the vehicle stopped, the brake device increases the total braking force of the vehicle. The brake device disclosed in Patent Literature 1 is, by its hill start assist control function, able to maintain a braking force required for keeping the vehicle stopped on a hill, etc., without a driver's operation.

The brake device disclosed in Patent Literature 1 determines whether or not the driver has an intention to start based on the engine revolutions, the wheel speed, and the like, and upon determining that the driver has an intention to start, deactivates a brake pressure. Thus, the hill start assist control function of the brake device disclosed in Patent Literature 1 is deactivated based on the engine revolutions, the wheel speed, and the like, to enable the vehicle to start.

DE 10 2008 026 531 A1 discloses a brake pressure controlling method. The method involves setting a retaining brake pressure in a rear wheel brake circuit after stopping or approximately stopping of a motor cycle by a driver. The retaining brake pressure is determined from the brake operating pressure of a front wheel and the brake operating pressure of a rear wheel which are required for stopping the motor cycle. The retaining brake pressure is determined depending on a vehicle delay obtained during stopping.

Citation List

Patent Literature

PTL 1: Japanese Patent Application Laid-Open No. 2011-230667

Summary of Invention

Technical Problem

However, in the brake device disclosed in Patent Literature 1, a smooth start of a straddled vehicle can sometimes not be obtained at a vehicle start timing expected by a driver. If a start of the straddled vehicle does not appropriately follow the driver's intention to start, the driver may feel nonsmoothness in starting the straddled vehicle.

The present teaching aims to provide: a control device for straddled vehicle that aids in stability of the straddled vehicle at a time of starting on a slope, etc., and that enables a smooth start with suppression of nonsmoothness felt by a driver; and a straddled vehicle.

Solution to Problem

To solve the problems described above, the present teaching adopts the following configurations.

(1) A control device for straddled vehicle, the control device including:

a brake pressure acquisition unit configured to acquire a pre-stop brake pressure when the straddled vehicle is stopped by braking; a total weight acquisition unit configured to acquire an estimate value of a total weight of the straddled vehicle; a stop-time brake pressure setting unit configured to set a brake pressure for stopping the straddled vehicle based at least on the pre-stop brake pressure acquired by the brake pressure acquisition unit and the estimate value of the total weight of the straddled vehicle acquired by the total weight acquisition unit; and a brake control unit configured to, when no brake operation is performed by a driver, actuate a brake device of the straddled vehicle based on the brake pressure set by the stop-time brake pressure setting unit.

In the control device for straddled vehicle of (1), a brake pressure of the brake device that is actuated when no brake operation is performed by the driver (hereinafter sometimes "when no brake operation is performed") is set based at least on the pre-stop brake pressure acquired when the straddled vehicle is stopped by braking. The pre-stop brake pressure reflects a state (for example, a friction coefficient μ) of the brake device of the straddled vehicle at that time point. Thus, the teaching of the present application enables appropriate setting of the brake pressure of the brake device that operates when no brake operation is performed. This can suppress an excessive increase in the brake pressure of the brake device that operates when no brake operation is performed, as compared to a brake pressure required for keeping the straddled vehicle stopped. As a result, a time required for deactivation of the brake pressure can be shortened. In the straddled vehicle, a time taken from when determination is made that the driver has an intention to start to when deactivation of the brake pressure is completed can be shortened. It therefore is easy that a start of the straddled vehicle follows a driver's intention to start, and nonsmoothness or a rapid torque change felt by the driver can be suppressed. Since the brake pressure of the brake device that operates when no brake operation is performed can be set appropriately, rearward movement of the straddled vehicle on a hill, for example, can be suppressed, and the stability in starting the straddled vehicle can be enhanced. Accordingly, the control device for straddled vehicle according to the teaching of the present application can aid in stability of the straddled vehicle at a time of starting on a slope, etc., and enables a smooth start with suppression of nonsmoothness felt by the driver.

In addition, the brake pressure of the brake device that operates when no brake operation is performed is set based at least on the pre-stop brake pressure acquired when the straddled vehicle is stopped by braking and the total weight. This enables more precise setting of the brake pressure of the brake device that operates when no brake operation is performed. Accordingly, more effective aid is given to the stability of the straddled vehicle at a time of starting on a slope, etc., and a smooth start is enabled with further suppression of nonsmoothness felt by the driver.

(2) The control device for straddled vehicle of (1) further includes a vehicle speed acquisition unit configured to acquire a speed of the straddled vehicle at a time when the pre-stop brake pressure is acquired,

the stop-time brake pressure setting unit being configured to set a brake pressure for stopping the straddled vehicle based at least on the pre-stop brake pressure and a speed at a time when the pre-stop brake pressure is acquired.

In the configuration of (2), the brake pressure of the brake device that operates when no brake operation is performed is set based at least on the pre-stop brake pressure acquired when the straddled vehicle is stopped by braking and the speed at the time when the brake pressure is acquired. A state of the brake device of the straddled vehicle before the stop is reflected not only in the pre-stop brake pressure but also in the speed at that time. Use of the speed enables more precise setting of the brake pressure of the brake device that operates when no brake operation is performed. Accordingly, more effective aid is given to the stability of the straddled vehicle at a time of starting on a slope, etc., and a smooth start is enabled with further suppression of nonsmoothness felt by the driver.

(3) The control device for straddled vehicle of (2) further includes an acceleration acquisition unit that acquires an acceleration of the straddled vehicle based on a speed of the straddled vehicle acquired by the vehicle speed acquisition unit,

the stop-time brake pressure setting unit being configured to set a brake pressure for stopping the straddled vehicle based at least on the pre-stop brake pressure and an acceleration corresponding to a speed at a time when the pre-stop brake pressure is acquired.

In the configuration of (3), the brake pressure of the brake device that operates when no brake operation is performed is set based at least on the pre-stop brake pressure acquired when the straddled vehicle is stopped by braking and the acceleration at the time when the brake pressure is acquired. A state of the brake device of the straddled vehicle before the stop is more precisely reflected in the acceleration at the time when the pre-stop brake pressure is acquired. Use of the acceleration enables more precise setting of the brake pressure of the brake device that operates when no brake operation is performed. Accordingly, more effective aid is given to the stability of the straddled vehicle at a time of starting on a slope, etc., and a smooth start is enabled with further suppression of nonsmoothness felt by the driver.

(4) A straddled vehicle including:

> a wheel of the straddled vehicle;
> the control device of any one of (1) to (5); and
> a brake device that is actuated by a brake control unit of the control device.

The straddled vehicle of (4) is able to ensure a stability of the straddled vehicle at a time of starting on a slope, etc., and enables a smooth start with suppression of nonsmoothness felt by the driver.

Advantageous Effects of Invention

The control device for straddled vehicle and the straddled vehicle according to the teaching of the present application are able to aid in stability of the straddled vehicle at a time of starting on a slope, etc., and enable a smooth start with suppression of nonsmoothness felt by a driver.

Brief Description of Drawings

[FIG. 1] A side view of a motorcycle equipped with a control device for straddled vehicle according to a first embodiment of the present teaching.

[FIG. 2] (A) is a first schematic diagram for explanation of forces that act on a straddled vehicle on a slope; (B) is a second schematic diagram for explanation of the forces that act on the straddled vehicle on the slope; and (C) is a third schematic diagram for explanation of the forces that act on the straddled vehicle on the slope.

[FIG. 3] A block diagram showing a configuration of an engine control device and a hill assist control device.

[FIG. 4] A flowchart of a hill assist execution determination process.

[FIG. 5] A flowchart of a hill assist process.

[FIG. 6] A flowchart of a brake pressure command value calculation process shown in FIG. 5.

[FIG. 7] A flowchart of an engine correction command value calculation process shown in FIG. 5.

[FIG. 8] A flowchart of a command value update process shown in FIG. 5.

[FIG. 9] (A) is a graph showing changes in forces that act on a straddled vehicle starting on a slope according to the embodiment; and (B) is a graph showing changes in acting forces according to a comparative example.

[FIG. 10] A graph showing changes in forces that act on a straddled vehicle starting on a slope, under control of an engine control device and a hill assist control device according to a second embodiment.

Description of Embodiments

The inventor of the present application studied the problems described above, and found out the followings.

A straddled vehicle has a higher mobility than ordinary automobiles do. The straddled vehicle is likely to perform frequent acceleration and deceleration. Therefore, in the straddled vehicle, the frequency of use of a brake device is generally high, and a braking member (e.g., a disc rotor, a brake pad, etc.) included in the brake device is likely to be heated by friction. Some of the straddled vehicles have their braking members exposed. In this type of straddled vehicle, the braking member is easily cooled, but exposed to rain water, muddy water, etc. Due to influences from such temperature and surface conditions, the friction coefficient of the braking member is liable to variation. The variation in the friction coefficient causes a variation in the braking capacity. That is, the braking capacity varies depending on traveling states and environments of the straddled vehicle.

To suppress rollback of the straddled vehicle on a hill irrespective of traveling states and environments of the straddled vehicle, it is necessary that the brake pressure obtained when no brake operation is performed is set sufficiently high so as to tolerate a variation in the braking capacity. The conventional brake device as disclosed in Patent Literature 1 is configured to increase the braking capacity of a vehicle by increasing the pressure if the braking capacity of the vehicle under a state where a driver deactivates a brake input is insufficient relative to a braking force required for keeping the vehicle stopped. Here, the braking force required for keeping the vehicle stopped is set high so as to tolerate a variation in the braking capacity, as mentioned above. Therefore, in the conventional brake device as disclosed in Patent Literature 1, the brake pressure obtained when no brake operation is performed is set sufficiently high by the increase in the braking capacity of the vehicle through the pressure increase. As a result, the conventional brake device as disclosed in Patent Literature 1 can suppress rollback of the straddled vehicle on a hill.

However, when the brake pressure obtained when no brake operation is performed is set sufficiently high so as to tolerate a variation in the braking capacity as described above, the brake pressure obtained when no brake operation is performed may sometimes be excessively high relative to the braking force required for keeping the vehicle stopped, depending on the traveling states and environments of the straddled vehicle. In such a case, a time required for deactivation of the brake pressure is prolonged. That is, a prolonged time is taken from when a determination is made that a driver intends to start the straddled vehicle to when deactivation of the brake pressure is completed. It therefore is difficult that a start of the straddled vehicle follows the driver's intention to start. As a result, the driver may undesirably feel nonsmoothness or a rapid torque change.

It is conceivable that the brake pressure obtained when no brake operation is performed is set low. However, setting the brake pressure obtained when no brake operation is performed low, involves a risk that rollback of the straddled vehicle may occur on a hill. It is difficult to ensure a stability in starting the straddled vehicle.

Thus, it is conventionally believed that there is a trade-off relationship between suppressing rollback of the straddled vehicle on a hill to ensure a stability in starting the straddled vehicle and enabling a smooth start with suppression of nonsmoothness felt by the driver.

The inventor of the present application made studies to overcome the trade-off relationship mentioned above. The inventor of the present application changed the way of thinking and overturned the conventional design concept that the brake pressure of a brake device that operates when no brake operation is performed is set sufficiently high, to eventually conceived of an idea that the brake pressure of a brake device operates when no brake operation is performed is set appropriately.

The inventor of the present application made further studies. The inventor of the present application consequently found out that, when the straddled vehicle is stopped by braking, setting a brake pressure for stopping the straddled vehicle based on a pre-stop brake pressure enables the state of a brake device of the straddled vehicle at that time to be reflected in a brake pressure in a state where no brake operation is performed. In this manner, a brake pressure of the brake device that operates when no brake operation is performed can be set appropriately.

The teaching of the present application is a teaching accomplished based on the findings described above.

Embodiments of the present teaching will now be described with reference to the drawings.

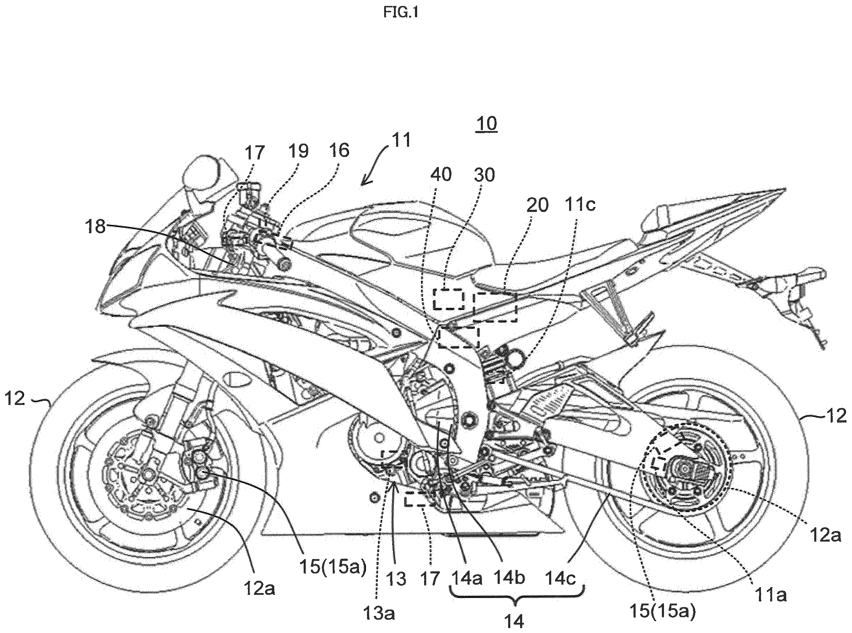

FIG. 1 is a side view of a motorcycle equipped with a control device for straddled vehicle according to a first embodiment of the present teaching.

A straddled vehicle 10 shown in FIG. 1 is a motorcycle. The straddled vehicle 10 includes a vehicle body 11 and two wheels 12. The wheels 12 are rotatably supported on the vehicle body 11. The vehicle body 11 includes an engine 13, a transmission mechanism 14, and brake devices 15. The transmission mechanism 14 has a clutch 14a, a transmission device 14b, and a chain 14c. A driving force outputted from the engine 13 is transmitted to the rear wheel 12 through the transmission mechanism 14 including the clutch 14a.

The brake device 15 is a friction brake configured to produce a braking force in the wheel 12 by a frictional force. The brake device 15 is formed of a disc brake. The brake device 15 includes a brake pad 15a that is operable by a hydraulic pressure of a hydraulic fluid. The brake device 15 pushes the brake pad 15a against a disc rotor 12a that rotates together with the wheel 12. The brake device 15 produces a braking force by friction between the brake pad 15a and the disc rotor 12a. The brake device 15 brakes the straddled vehicle 10 by producing the braking force in the wheel 12. The braking makes the straddled vehicle 10 decelerate or stop. When the straddled vehicle 10 is on a slope for example, the braking force counteracts a force that acts on the straddled vehicle 10 on the slope. This allows the straddled vehicle 10 to be kept stopped.

The engine 13 is provided with an engine rotation sensor 13a that detects the rotation speed of the engine 13. The engine rotation sensor 13a outputs a signal corresponding to the rotation speed of the engine 13.

The straddled vehicle 10 includes a vehicle speed sensor 11a, a load sensor 11c, an accelerator operation part 16, a brake operation part 17, a clutch operation part 18, an engine control device 20, a hill assist control device 30, and a brake pressure adjustment device 40.

The vehicle speed sensor 11a detects the speed of the straddled vehicle 10 by detecting the rotation speed of the wheel 12. The vehicle speed sensor 11a outputs a signal corresponding to the speed of the straddled vehicle 10.

The load sensor 11c detects a load applied to the straddled vehicle 10. The load sensor 11c is provided with a six-axis sensor including a three-axis acceleration sensor and a three-axis gyro sensor, for example.

The accelerator operation part 16, the brake operation part 17, and the clutch operation part 18 are operated by a driver. The engine control device 20 controls an output of the engine 13 based on an operation on the accelerator operation part 16. The engine control device 20 controls the output of the engine 13 by, for example, changing an ignition timing of the engine 13, the amount of intake air, and an intake fuel. The clutch operation part 18 controls an operation of the clutch 14a.

Each of the accelerator operation part 16, the brake operation part 17, and the clutch operation part 18 is provided with a sensor (not shown) for detecting the operation thereof. Via the corresponding sensor, each of the accelerator operation part 16, the brake operation part 17, and the clutch operation part 18 outputs a signal indicating the amount of operation thereof to the hill assist control device 30.

The brake pressure adjustment device 40 adjusts the braking force to be generated by the brake device 15, based on an operation on the brake operation part 17 and a command value supplied from the hill assist control device 30.

The brake pressure adjustment device 40 supplies a hydraulic pressure to the brake device 15, the hydraulic pressure being outputted from the brake operation part 17 in accordance with an operation performed by the driver. The brake device 15 is actuated with a brake pressure that is outputted from the brake pressure adjustment device 40. The brake pressure is a pressure by which the brake pad 15a is pushed against the disc rotor 12a. The brake pad 15a of the brake device 15 is pushed against the disc rotor 12a of the wheel 12 by a brake pressure corresponding to the hydraulic pressure outputted from the brake pressure adjustment device 40. The brake pressure adjustment device 40 has a hydraulic pressure pump and a valve (not shown). For example, an operation of the hydraulic pressure pump enables the brake pressure adjustment device 40 to supply a hydraulic pressure to the brake device 15, the hydraulic pressure being higher than the hydraulic pressure outputted from the brake operation part 17. The brake pressure adjustment device 40 is able to actuate the brake device 15 when no brake operation is performed. The brake pressure adjustment device 40 provided to the brake device 15 of this embodiment is configured to actuate the brake device 15 under a brake pressure corresponding to a brake pressure command value Psc supplied from the hill assist control device 30.

The brake pressure adjustment device 40 includes a sensor (not shown) that detects the brake pressure. Specifically, a hydraulic pressure sensor of the brake pressure adjustment device 40 outputs a signal corresponding to a hydraulic pressure. Since a hydraulic pressure of a hydraulic fluid corresponds to a brake pressure generated in the brake pad 15a, a brake pressure based on the signal supplied from the brake pressure adjustment device 40 can be obtained.

The hill assist control device 30 controls the brake pressure adjustment device 40. The hill assist control device 30 controls the brake pressure adjustment device 40 based on operations on the brake operation part 17 and the accelerator operation part 16. The hill assist control device 30 controls the brake pressure adjustment device 40 and the brake device 15 so as to aid a starting operation of the straddled vehicle 10 on a slope. A function for controlling the brake device 15 so as to aid the starting operation of the straddled vehicle 10 on a slope will be called hill assist.

The straddled vehicle 10 is provided with a hill assist switch 19. The hill assist switch 19, when operated by the driver, switches whether or not to enter a hill assist mode in which the hill assist is operable.

Here, the hill assist control device 30 of this embodiment may be equipped with an anti-lock braking system (ABS) control function in addition to the hill assist.

The engine control device 20, the hill assist control device 30, and the brake pressure adjustment device 40 constitute a control device for straddled vehicle. Each of the engine control device 20 and the hill assist control device 30 includes a central processing unit and a storage device (not shown). The storage device stores programs to be executed by the central processing unit, data to be used in computational operations by the central processing unit, and data of results of the computational operations. The engine control device 20 and the hill assist control device 30 may be implemented as single hardware.

[Forces in Stopped and Starting States]

The hill assist control device 30 controls the brake pressure adjustment device 40 and the brake device 15 so as to aid the starting operation of the straddled vehicle 10 on a slope.

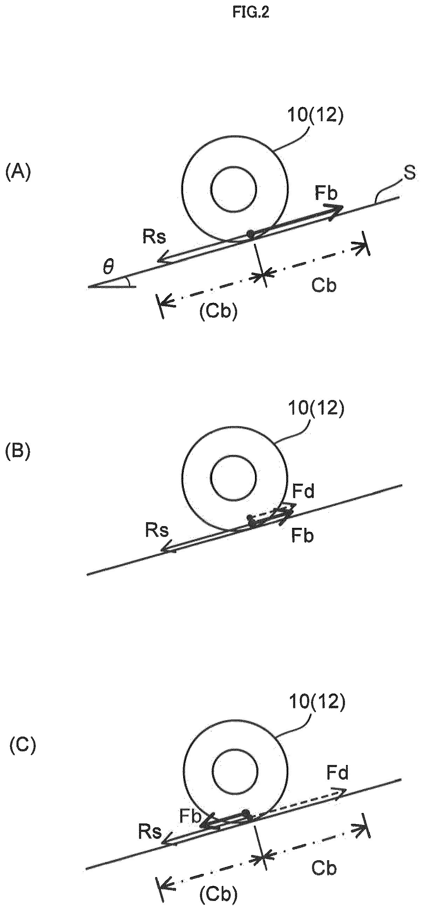

FIG. 2(A) to FIG. 2(C) are schematic diagrams for explanation of forces that act on the straddled vehicle 10 on a slope. In FIG. 2(A) to FIG. 2(C), forces that act on the straddled vehicle 10 are illustrated as forces that act on one wheel 12. The straddled vehicle 10 is stopped with the front side of the straddled vehicle 10 facing toward the upside of the slope S. That is, the straddled vehicle 10 is stopped on an uphill.

As shown in FIG. 2(A), a grade resistance Rs acts on the straddled vehicle 10 on the slope. The grade resistance Rs is a force that acts on the straddled vehicle 10 due to a grade of the slope. The grade resistance Rs is a force directed to move the straddled vehicle 10, which is stopped, toward the downside of the slope. The grade resistance Rs is a force resisting travel of the straddled vehicle 10 that is traveling up the slope. The grade resistance Rs is a force directed rearward of the straddled vehicle 10. The direction in which the grade resistance Rs acts is opposite to the direction in which the straddled vehicle 10 starts.

The grade resistance Rs is attributable to the gravity. The grade resistance Rs acts in the direction parallel to a ground surface of the slope S. The magnitude of the grade resistance Rs is based on a total weight m of the straddled vehicle 10 and a grade $\theta$ of the slope. The larger the total weight m is, the higher the grade resistance Rs is. The greater the grade $\theta$ of the slope is, the higher the grade resistance Rs is. The grade resistance Rs is represented by, for example, the following expression:

$$Rs = m \cdot g \cdot \sin\theta,$$

where m represents the vehicle total weight, g represents the gravitational acceleration, and $\theta$ represents the grade (angle) of the slope.

The magnitude of the grade resistance Rs does not change even when the braking force or driving force of the straddled vehicle 10 changes.

As shown in FIG. 2(A), a braking force Fb acts on the straddled vehicle 10 that is stopped on the slope. The brake device 15 (see FIG. 1) applies the braking force Fb to the straddled vehicle 10. When the straddled vehicle 10 is stopped, the forces acting on the straddled vehicle 10 are balanced. That is, the braking force Fb occurs as a reactive force against forces acting on the straddled vehicle 10 except the braking force Fb. Even when the brake pressure does not vary, the braking force Fb varies in accordance with variations in the other forces acting on the straddled vehicle 10. In the state shown in FIG. 2(A), the braking force Fb is balanced with the grade resistance Rs. Accordingly, the straddled vehicle 10 is stopped.

The braking force Fb is variable within a certain range corresponding to the brake pressure. An upper limit of the braking force outputtable by the brake device 15 under a given brake pressure will be referred to as a braking capacity Cb. The braking force Fb and the braking capacity Cb are different physical quantities. The braking capacity Cb represents a capability of the braking force outputtable by the brake device 15 under the given brake pressure. The braking capacity Cb represents the magnitude of the maximum braking force outputtable by the brake device 15 under the given brake pressure. The braking capacity Cb is the upper limit of the magnitude of the braking force. Therefore, in FIG. 2(A), the braking capacity Cb is indicated for both of directions, namely, forward and rearward directions, in which the braking force Fb can occur. The braking capacity serving as the upper limit of the magnitude of the braking force traveling rearward of the straddled vehicle 10 is indicated as "(Cb)" in FIG. 2(A).

The braking capacity Cb is attributable to a frictional force of the brake device 15. The braking capacity Cb is based on the Coulomb law. The braking capacity Cb is according to a brake pressure Pb under which the brake device 15 is actuated. When the brake device 15 is actuated under the brake pressure Pb, the braking capacity Cb is represented by, for example, the following expression:

$$Cb \propto \mu \cdot Pb,$$

where $\mu$ represents the friction coefficient between the brake pad 15a and the disc rotor 12a, and Pb represents the brake pressure.

When the friction coefficient is fixed, the braking capacity Cb is substantially proportional to the brake pressure Pb.

The braking force Fb is a force that is actually occurring in the brake device 15. When the brake device 15 is actuated while the straddled vehicle 10 is moving, the braking force Fb is substantially equal to the braking capacity Cb. When the brake device 15 is actuated while the straddled vehicle 10 is stopped, the braking force Fb is substantially equal to or less than the braking capacity Cb. When the brake device 15 is actuated while the straddled vehicle 10 is stopped, the braking force Fb is normally less than the braking capacity Cb.

For example, when the brake device 15 is actuated under the brake pressure Pb while neither the grade resistance nor the driving force is acting on the straddled vehicle 10 stopped in a substantially horizontal place, the braking capacity Cb according to the brake pressure Pb occurs. That is, the braking capacity Cb has a value other than zero. At this time, the braking force Fb does not occur. This is because the braking force Fb in the stopped state occurs as a reactive force (reaction) against a force directed to move the stopped straddled vehicle 10.

At a time of starting, the accelerator operation part 16 is operated so that a driving force Fd occurs. FIG. 2(B) shows a state where the driving force Fd is acting on the straddled vehicle 10. The driving force Fd is a force for making the straddled vehicle 10 travel forward. The driving force Fd acts in the direction parallel to the ground surface of the slope. The driving force Fd is a force directed toward the upside of the slope. The driving force Fd is a force directed opposite to the grade resistance Rs.

An increase in the driving force Fd caused by, for example, an operation on the accelerator operation part 16 (see FIG. 1) leads to a decrease in the braking force Fb. In a vehicle stopped state, the braking force Fb decreases along with an increase in the driving force Fd. This is because the braking force Fb in the vehicle stopped state is a reactive force against a combined force of the driving force Fd and the grade resistance Rs.

When the driving force Fd increases so that the magnitude of the driving force Fd exceeds the magnitude of the grade resistance Rs, the direction of the braking force Fb turns opposite to the direction of the driving force Fd, as shown in FIG. 2(C). This is because the braking force Fb is a reactive force against a combined force of the driving force Fd and the grade resistance Rs. The braking force Fb acts rearward of the straddled vehicle 10.

In the state shown in FIG. 2(C), the braking force Fb increases along with an increase in the driving force Fd. The magnitude of the braking force Fb increases up to the braking capacity (Cb).

In the state shown in FIG. 2(C), the braking force Fb acts so as to disturb the straddled vehicle 10 in starting with the driving force Fd. This is why the straddled vehicle 10 does not start even though the magnitude of the driving force Fd exceeds the magnitude of the grade resistance Rs.

The magnitude of the braking force Fb does not exceed the braking capacity (Cb). If the driving force Fd increases so that the driving force Fd exceeds the sum of the magnitudes of the braking capacity (Cb) and the grade resistance Rs, the force balance is disrupted. As a result, the straddled vehicle 10 starts. In other words, the straddled vehicle 10 does not start until the driving force Fd exceeds the sum of the magnitudes of the braking capacity (Cb) and the grade resistance Rs. That is, the braking force Fb disturbs start. This makes the driver feel nonsmoothness.

The engine control device 20 and the hill assist control device 30 shown in FIG. 1 set a brake pressure for stopping the straddled vehicle 10 in a case where the straddled vehicle 10 stops on the slope S. The brake pressure for stopping the straddled vehicle 10 is a brake pressure capable of keeping the straddled vehicle 10 stopped on the slope S. In this embodiment, the brake pressure for stopping the straddled vehicle 10 is a minimum brake pressure capable of producing a braking force substantially equal to the grade resistance Rs. When the straddled vehicle is stopped by braking, the hill assist control device 30 sets a brake pressure corresponding to the grade resistance Rs based on a pre-stop brake pressure.

The hill assist control device 30 actuates the brake device 15 of the straddled vehicle based on the set brake pressure, when the straddled vehicle 10 is stopped on the slope S and the driver performs no brake operation. The engine control device 20 and the hill assist control device 30 are configured to aid in stability of the straddled vehicle 10 at a time of starting on a slope, etc. In addition, nonsmoothness felt by the driver is suppressed, and smooth start is enabled.

[Block Configuration]

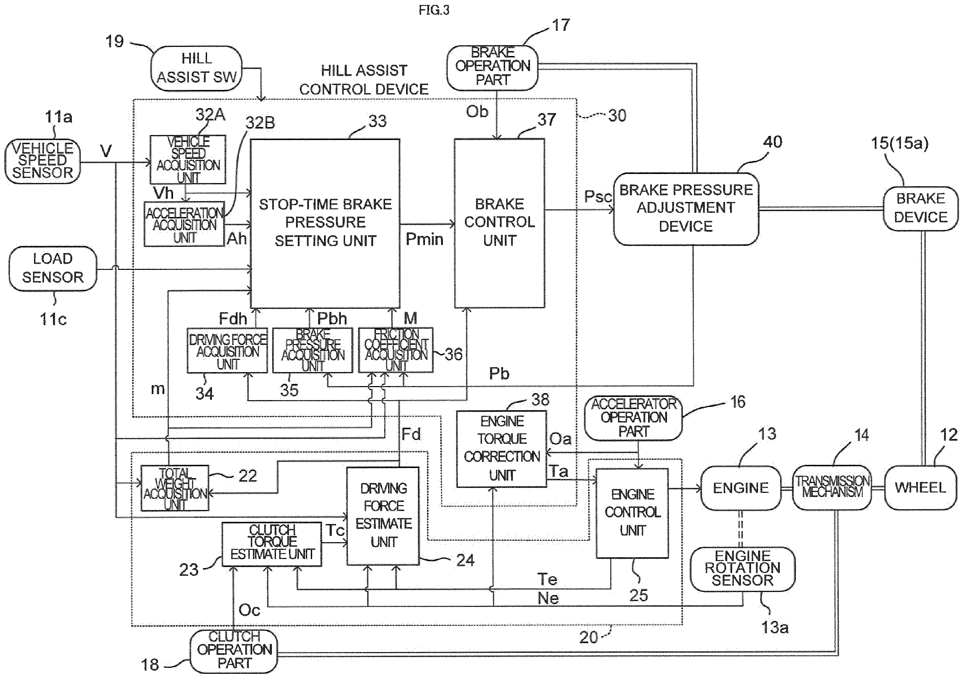

FIG. 3 is a block diagram showing a configuration of the engine control device 20 and the hill assist control device 30. FIG. 3 also shows devices connected to the engine control device 20 or the hill assist control device 30. In FIG. 3, a double line connecting blocks to each other represents a physical quantity or a physical action. A single line represents a flow of data indicating the corresponding value. In the description of this embodiment, processing of the force value, the pressure value, etc. may be simply illustrated as processing of "pressure" and "force", with abbreviation of "value".

The hill assist control device 30 includes a vehicle speed acquisition unit 32A, an acceleration acquisition unit 32B, a stop-time brake pressure setting unit 33, a driving force acquisition unit 34, a brake pressure acquisition unit 35, a friction coefficient acquisition unit 36, a brake control unit 37, and an engine torque correction unit 38. The respective units of the hill assist control device 30 are implemented by a central processing unit (not shown) executing a program.

The brake pressure acquisition unit 35 acquires a brake pressure Pb from the brake pressure adjustment device 40. In detail, the brake pressure acquisition unit 35 acquires the brake pressure Pb based on a signal outputted from the brake pressure adjustment device 40. The brake pressure adjustment device 40 outputs a signal indicating a hydraulic pressure of a hydraulic fluid. The brake pressure Pb corresponds to the hydraulic pressure of the hydraulic fluid. This is why the brake pressure acquisition unit 35 is able to acquire the brake pressure Pb based on the signal supplied from the brake pressure adjustment device 40. It may be also possible that the brake pressure acquisition unit 35 uses the hydraulic pressure directly as the brake pressure Pb.

The brake pressure acquisition unit 35 of this embodiment constantly acquires the brake pressure Pb. The brake pressure acquisition unit 35 stores the acquired brake pressure Pb in a storage device (not shown). The brake pressure acquisition unit 35 acquires the brake pressure Pb also when the straddled vehicle 10 is stopped by braking. A pre-stop brake pressure Pb obtained before the straddled vehicle 10 is stopped by braking is defined as a brake pressure Pbh. The pre-stop brake pressure Pbh obtained before the straddled vehicle 10 is stopped by braking is used for the setting of a brake pressure Pmin for stopping the straddled vehicle 10.

Here, the brake pressure acquisition unit 35 may be configured to acquire only the pre-stop brake pressure Pbh.

The vehicle speed acquisition unit 32A acquires a speed V of the straddled vehicle 10. In detail, the vehicle speed acquisition unit 32A acquires the speed V of the straddled vehicle 10 from the vehicle speed sensor 11a.

The vehicle speed acquisition unit 32A of this embodiment constantly acquires the speed V of the straddled vehicle 10. The vehicle speed acquisition unit 32A stores the acquired speed V in a storage device (not shown). The vehicle speed acquisition unit 32A acquires the speed V also when the pre-stop brake pressure Pbh is acquired by the brake pressure acquisition unit 35. The speed V acquired when the pre-stop brake pressure Pbh is acquired is defined as a speed Vh. The speed Vh of the straddled vehicle 10 at the time when the pre-stop brake pressure Pbh is received is used for the setting of the brake pressure Pmin for stopping the straddled vehicle 10.

Here, the vehicle speed acquisition unit 32A may be configured to acquire only the speed Vh of the straddled vehicle 10 at the time when the pre-stop brake pressure Pbh is acquired.

The acceleration acquisition unit 32B calculates an acceleration Ah of the straddled vehicle 10 based on the speed Vh of the straddled vehicle 10 acquired by the vehicle speed acquisition unit 32A. The acceleration acquisition unit 32B calculates the acceleration Ah based on a difference in the speeds Vh received at a plurality of timings.

The driving force acquisition unit 34 acquires a driving force Fd of the straddled vehicle 10 from a driving force estimate unit 24.

The driving force acquisition unit 34 of this embodiment constantly acquires the driving force Fd of the straddled vehicle 10. The driving force acquisition unit 34 stores the acquired driving force Fd in a storage device (not shown). The driving force acquisition unit 34 acquires the driving force Fd also before the straddled vehicle 10 is stopped, in a case where the straddled vehicle 10 is stopped by braking. A pre-stop driving force Fd obtained before the straddled vehicle 10 is stopped by braking is defined as a driving force Fdh. The pre-stop driving force Fdh obtained before the straddled vehicle 10 is stopped by braking is used for the setting of the brake pressure Pmin for stopping the straddled vehicle 10.

Here, the driving force acquisition unit 34 may be configured to acquire only the pre-stop driving force Fdh.

The friction coefficient acquisition unit 36 calculates an estimate value of the friction coefficient M. The friction coefficient M is a coefficient of friction between the brake pad 15a and the disc rotor 12a. The friction coefficient acquisition unit 36 calculates an estimate value of the friction coefficient M in a case where the straddled vehicle 10 is braked in a substantially horizontal place. More specifically, the friction coefficient acquisition unit 36 calculates an estimate value of the friction coefficient M based on the brake pressure Pb, the speed V, and the total weight m obtained when the straddled vehicle 10 is braked in a substantially horizontal place. The friction coefficient acquisition unit 36 calculates the braking force Fb by using, for example, an equation of motion. The friction coefficient acquisition unit 36 calculates an estimate value of the friction coefficient M from the calculated braking force Fb and the brake pressure Pb. The friction coefficient acquisition unit 36 stores the acquired estimate value of the friction coefficient M in a storage device (not shown).

The stop-time brake pressure setting unit 33 sets a brake pressure for stopping the straddled vehicle 10, based on the brake pressure Pbh received by the brake pressure acquisition unit 35.

The stop-time brake pressure setting unit 33 of this embodiment calculates, as the brake pressure for stopping the straddled vehicle 10, a minimum brake pressure required for stopping the straddled vehicle 10 on a slope. The minimum brake pressure required for stopping the straddled vehicle 10 on a slope will be referred to as a minimum brake pressure Pmin. The minimum brake pressure Pmin is a brake pressure that produces a braking capacity Cb substantially equal to the grade resistance Rs acting on the straddled vehicle 10.

The stop-time brake pressure setting unit 33 of this embodiment sets the minimum brake pressure Pmin based on the pre-stop brake pressure Pbh received by the brake pressure acquisition unit 35.

The stop-time brake pressure setting unit 33 of this embodiment calculates not only the brake pressure Pbh but also the minimum brake pressure Pmin based on the acceleration (deceleration) Ah acquired by the vehicle speed acquisition unit 32A and an estimate value of the total weight m acquired by a total weight acquisition unit 22.

To be more specific, the stop-time brake pressure setting unit 33 calculates the grade resistance Rs based on the brake pressure Pbh acquired by the brake pressure acquisition unit 35 and an estimate value of the driving force Fd acquired by the driving force acquisition unit 34. The stop-time brake pressure setting unit 33 calculates the grade resistance Rs acting on the vehicle by using, for example, the following equation of motion.

$$Rs = (Fb+Fd) - m \times Ah$$

where Fb represents a braking force, Fd represents a driving force, m represents an estimate value of the total weight, and Ah represents an acceleration (deceleration).

The braking force Fb is calculated with use of the brake pressure Pbh and the estimate value of the friction coefficient M.

The stop-time brake pressure setting unit 33 calculates the minimum brake pressure Pmin that produces a braking capacity Cb substantially equal to the calculated grade resistance Rs.

This way, the stop-time brake pressure setting unit 33 calculates the minimum brake pressure Pmin based on the pre-stop brake pressure Pbh obtained before the straddled vehicle 10 is stopped by braking.

The stop-time brake pressure setting unit 33 of this embodiment constantly calculates the minimum brake pressure Pmin.

Only when the straddled vehicle 10 is stopped on a slope, the stop-time brake pressure setting unit 33 outputs the minimum brake pressure Pmin, which has been calculated before the stop, so as to be referred to by the brake control unit 37. To be exact, the stop-time brake pressure setting unit 33 stores the minimum brake pressure Pmin in a storage unit (not shown) so as to be referred to by the brake control unit 37. The minimum brake pressure Pmin is set in this manner.

As described above, the stop-time brake pressure setting unit 33 sets the minimum brake pressure Pmin based on the pre-stop brake pressure Pbh. Therefore, the minimum brake pressure Pmin reflects the friction coefficient of the brake device 15 of the straddled vehicle 10 obtained before the stop. For example, when the temperature of the brake pad 15a is high, the friction coefficient is low. If the friction coefficient is low when the straddled vehicle 10 is stopped by braking, a high brake pressure Pbh is applied in order to obtain a desired acceleration (deceleration). As a result, the minimum brake pressure Pmin obtained by using the above equation of motion is high.

The brake control unit 37 controls the brake pressure adjustment device 40, to actuate the brake device 15.

When the straddled vehicle 10 is stopped on a slope, the brake control unit 37 actuates the brake device 15 even if no brake operation is performed. Here, it may be also acceptable that the brake control unit 37 actuates the brake device 15 while a brake operation is performed after the straddled vehicle 10 is stopped on a slope. Since the brake control unit 37 actuates the brake device 15 while the straddled vehicle 10 is stopped, rearward movement of the straddled vehicle 10 on the slope is suppressed.

The brake control unit 37 actuates the brake device 15 if the amount Ob of operation on the brake operation part 17 is less than a predetermined reference value. It may be also acceptable that the brake control unit 37 actuates the brake device 15 irrespective of the amount Ob of operation on the brake operation part 17.

The brake control unit 37 controls the brake pressure adjustment device 40 by outputting, to the brake pressure adjustment device 40, the brake pressure command value Psc (brake pressure Psc) that is based on the minimum brake pressure Pmin set by the stop-time brake pressure setting unit 33. The brake pressure Psc serves as the brake pressure Pb under which the brake device 15 is actuated. The brake pressure adjustment device 40 actuates the brake device 15 under a brake pressure according to the brake pressure command value Psc supplied from the brake control unit 37.

The brake control unit 37 controls the brake pressure command value Psc to be outputted, in accordance with the driving force Fd. When the straddled vehicle 10 starts on a slope, the brake pressure is deactivated along with an increase in the driving force Fd caused by the driver's operation on the accelerator. The control of the brake pressure by the brake control unit 37 will be described later.

When the straddled vehicle 10 starts on a slope, the engine torque correction unit 38 outputs a torque correction value Ta to the engine control device 20. The engine torque correction unit 38 outputs a torque correction value Ta that stabilizes operations of the engine 13. The torque correction value Ta is a correction value that increases a torque to be outputted from the engine 13. The engine torque correction unit 38 determines the torque correction value Ta based on the amount Oa of operation on the accelerator of the accelerator operation part 16 and the rotation speed Ne of the engine 13 which is outputted from the engine rotation sensor 13a.

The engine control device 20 includes a total weight acquisition unit 22, a clutch torque estimate unit 23, a driving force estimate unit 24, and an engine control unit 25. The respective units of the engine control device 20 are implemented by a central processing unit executing a program.

The engine control unit 25 controls the engine 13. The engine control unit 25 controls the output of the engine 13 by, for example, changing an ignition timing of the engine 13, the amount of intake air, and an intake fuel. The engine control unit 25 controls the engine 13 based on the amount Oa of operation on the accelerator operation part 16. In a case where the engine torque correction unit 38 outputs the torque correction value Ta, the engine control unit 25 controls the engine 13 based on the amount Oa of operation on the accelerator operation part 16 and the torque correction value Ta.

The engine control unit 25 outputs an estimate value of the engine torque Te in accordance with an engine control state.

The clutch torque estimate unit 23 calculates an estimate value of a clutch torque Tc that is transmitted by the clutch 14a (see FIG. 1) of the transmission mechanism 14. The clutch torque estimate unit 23 calculates an estimate value of the clutch torque Tc based on the rotation speed Ne of the engine 13 and the estimate value of the engine torque Te.

Here, the clutch torque estimate unit 23 may be configured to calculate the estimate value of the clutch torque Tc based on the amount Oc of operation on the clutch operation part 18.

The driving force estimate unit 24 calculates an estimate value of the driving force Fd of the straddled vehicle 10. The driving force estimate unit 24 calculates an estimate value of the driving force Fd, from the rotation speed Ne of the engine 13, the estimate value of the engine torque Te, the speed V, and the estimate value of the clutch torque Tc.

The total weight acquisition unit 22 calculates the total weight m of the straddled vehicle 10. The total weight acquisition unit 22 calculates an estimate value of the total weight m based on the speed V of the straddled vehicle 10 and the driving force Fd that is acquired by the driving force estimate unit 24 when the straddled vehicle 10 is accelerating in a substantially horizontal place. The total weight acquisition unit 22 calculates an estimate value of the total weight m by using, for example, an equation of motion.

Here, the total weight acquisition unit 22 may be configured to calculate an estimate value of the total weight m based on a signal supplied from the load sensor 11c, for example.

[Operation of Control Device]

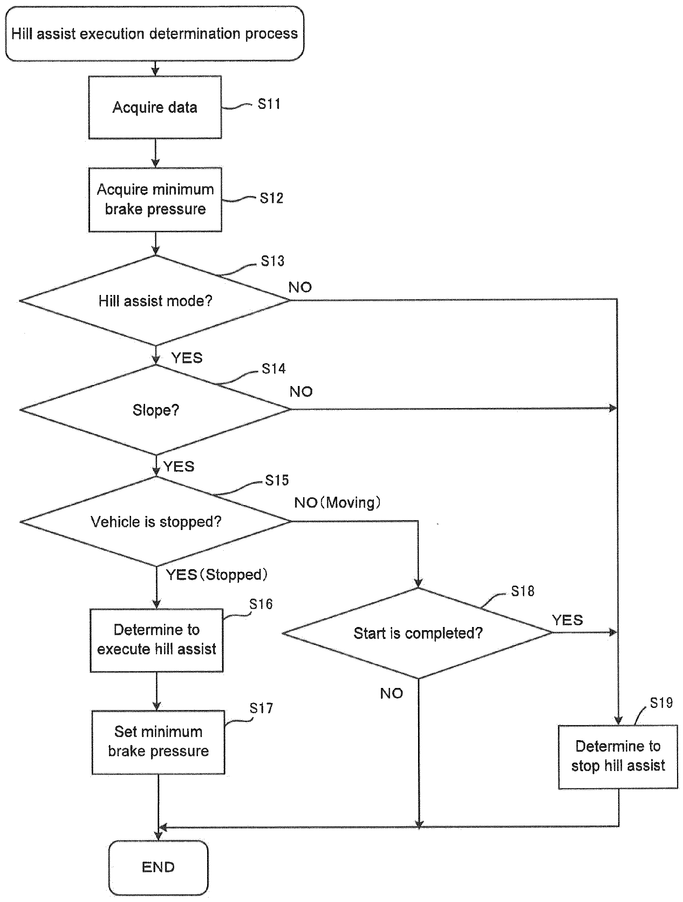

FIG. 4 to FIG. 8 are flowcharts for explanation of operations of the engine control device 20 and the hill assist control device 30 shown in FIG. 3.

Operations of the engine control device 20 and the hill assist control device 30 will be described with reference to FIG. 3 to FIG. 8.

FIG. 4 is a flowchart of a hill assist execution determination process.

In the hill assist execution determination process, data is acquired (S11). In the data acquisition processing (S11), various data indicating a state of the straddled vehicle 10 are acquired. The data acquisition processing (S11) is repeatedly executed irrespective of the state of the straddled vehicle 10.

In the data acquisition processing (S11), the brake pressure acquisition unit 35 repeatedly acquires the brake pressure Pb from the brake pressure adjustment device 40. In addition, the vehicle speed acquisition unit 32A repeatedly acquires the speed V of the straddled vehicle. In addition, the acceleration acquisition unit 32B acquires the acceleration Ah of the straddled vehicle 10. In addition, the driving force acquisition unit 34 repeatedly acquires the driving force Fd from the driving force estimate unit 24.

In the data acquisition processing (S11), the total weight acquisition unit 22 acquires the total weight m of the straddled vehicle 10. In this embodiment, the total weight acquisition unit 22 operates when the straddled vehicle 10 accelerates in a substantially horizontal place.

In the data acquisition processing (S11), the friction coefficient acquisition unit 36 acquires an estimate value of the friction coefficient M. In this embodiment, the friction coefficient acquisition unit 36 operates when the straddled vehicle 10 is stopped by braking in a substantially horizontal place.

In the data acquisition processing (S11), the engine control unit 25 calculates an estimate value of the engine torque Te. The engine control unit 25 performs a control of the engine 13 and calculation of an estimate value of the engine torque Te based on the torque correction value Ta. In the data acquisition processing (S11), the clutch torque estimate unit 23 calculates an estimate value of the clutch torque Tc. The driving force estimate unit 24 calculates an estimate value of the driving force Fd.

Then, a minimum brake pressure is obtained (S12). The stop-time brake pressure setting unit 33 repeatedly calculates the minimum brake pressure Pmin for stopping the straddled vehicle 10 on a slope.

The stop-time brake pressure setting unit 33 of this embodiment calculates an estimate value of the grade resistance Rs, to calculate the minimum brake pressure Pmin. More specifically, the stop-time brake pressure setting unit 33 calculates the grade resistance Rs by using the acceleration Ah, the total weight m, the braking force Fb, and the driving force Fd.

In this embodiment, a brake pressure that is acquired based on each pre-stop data obtained before the straddled vehicle 10 is stopped by braking is set as the effective minimum brake pressure Pmin. That is, the driving force acquisition unit 34 sets the minimum brake pressure Pmin for stopping the straddled vehicle 10 based on the pre-stop brake pressure Pbh as a result of processing of step S17 which will be described later.

Here, the stop-time brake pressure setting unit 33 may be configured to calculate the minimum brake pressure Pmin only when, for example, the state of the hill assist control device 30 is a hill assist mode and the straddled vehicle 10 is on a slope (S14:Yes).

Then, the hill assist control device 30 determines whether or not the state of the hill assist control device 30 is the hill assist mode (S13). If the hill assist switch 19 has been switched to the hill assist mode by an operation, the hill assist control device 30 determines that the state is the hill assist mode.

If the determination in step S13 mentioned above is that the state of the hill assist control device 30 is the hill assist mode (S13:Yes), the hill assist control device 30 determines whether or not the straddled vehicle 10 is on a slope (S14). The hill assist control device 30 determines whether or not the straddled vehicle 10 is on a slope, based on a signal outputted from the load sensor 11c.

If the determination in step S14 mentioned above is that the straddled vehicle 10 is on a slope (S14:Yes), the hill assist control device 30 determines whether or not the vehicle is stopped (S15). More specifically, the hill assist control device 30 determines whether or not the straddled vehicle 10 is stopped, based on the speed V obtained from the vehicle speed sensor 11a.

If the determination in step S15 mentioned above is that the straddled vehicle 10 is stopped (S15:Yes), it means that the straddled vehicle 10 in the hill assist mode is stopped on a slope. In this case (S15:Yes), the hill assist control device 30 determines to execute the hill assist (S16). To be exact, the hill assist control device 30 changes flag data (not shown) indicating a hill assist state into an execution state.

Then, the hill assist control device 30 sets the minimum brake pressure Pmin (S17). In more detail, the stop-time brake pressure setting unit 33 sets the minimum brake pressure Pmin to be referred to by the brake control unit 37.

The stop-time brake pressure setting unit 33, in step S12 mentioned above, repeatedly calculates the minimum brake pressure Pmin irrespective of the state of the straddled vehicle 10, and stores it in a storage device (not shown).

At a time point when the processing of step S17 is executed, the minimum brake pressure Pmin that is acquired based on the brake pressure Pbh, etc., before the vehicle is stopped on the slope is stored as the latest minimum brake pressure Pmin.

If it is determined that the straddled vehicle 10 is stopped on a slope (S15:Yes), the stop-time brake pressure setting unit 33 sets the latest minimum brake pressure Pmin as the minimum brake pressure Pmin to be referred to by the brake control unit 37. Thus, the stop-time brake pressure setting unit 33 sets the brake pressure that is acquired based on the brake pressure Pbh, the speed Vh, the acceleration Ah, and the driving force Fdh before the vehicle is stopped on the slope, as the minimum brake pressure Pmin to be referred to by the brake control unit 37.

It may be also acceptable that, in step S12 mentioned above, the hill assist control device 30 sets not the latest minimum brake pressure Pmin but a previous minimum brake pressure Pmin that has been acquired a plurality of times before, as the minimum brake pressure Pmin to be referred to by the brake control unit 37. In other words, the hill assist control device 30 may set a minimum brake pressure Pmin that has been acquired a predefined time period before the time point when the vehicle speed becomes zero, as the minimum brake pressure for stopping the straddled vehicle 10.

If the determination in step S15 mentioned above is that the vehicle is not stopped (S15:No), it means that the straddled vehicle 10 is moving. If it is determined that the vehicle is not stopped (S15:No), the hill assist control device 30 determines whether or not the start is completed (S18). Here, the hill assist control device 30 determines that the start is completed if the speed of the straddled vehicle 10 acquired based on a signal of the vehicle speed sensor 11a is higher than a predefined reference value.

If it is determined that the start is completed (S18:Yes), the hill assist control device 30 determines to stop the hill assist (S19). To be exact, the hill assist control device 30 changes the flag data (not shown) indicating the hill assist state into a non-execution state.

If the determination in step S13 mentioned above is that the state is not the hill assist mode (S13:No), the stop-time brake pressure setting unit 33 determines to stop the hill assist (S19). If the determination in step S14 mentioned above is that the vehicle is not on a slope (S14:No), the stop-time brake pressure setting unit 33 determines to stop the hill assist (S19). More specifically, the flag data is changed into the non-execution state. The hill assist is executed in a period from when the straddled vehicle 10 is stopped on a slope to when the straddled vehicle 10 starts.

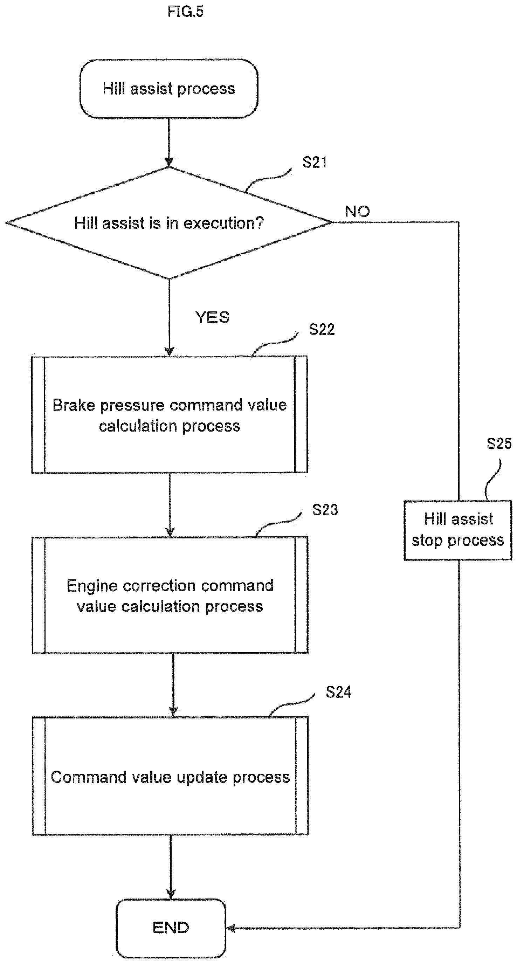

FIG. 5 is a flowchart of a hill assist process.

The hill assist process is repeatedly executed. In the hill assist process, the hill assist control device 30 determines whether or not the hill assist is in execution (S21). In more detail, the hill assist control device 30 determines whether or not the flag data indicating the hill assist state indicates the execution state.

If it is determined that the hill assist is in execution (S21:Yes), the hill assist control device 30 executes a brake pressure command value calculation process (S22). The hill assist control device 30 calculates the brake pressure command value Psc based on the minimum brake pressure Pmin and the estimate value of the driving force Fd.

If it is determined that the hill assist is in execution (S21:Yes), the hill assist control device 30 executes an engine correction command value calculation process (S23). In the engine correction command value calculation process (S23), the hill assist control device 30 calculates an engine correction command value for rotating the engine 13 at a stable rotation speed. The engine correction command value is, for example, the torque correction value Ta.

After the brake pressure command value calculation process (S22) and the engine correction command value calculation process (S23), the hill assist control device 30 executes a command value update process (S24).

In the command value update process (S24), the hill assist control device 30 outputs the brake pressure command value Psc calculated in the brake pressure command value calculation process (S22), to the brake pressure adjustment device 40. Thus, the brake pressure adjustment device 40 controls the brake device 15 in accordance with the command value Psc.

In addition, the hill assist control device 30 outputs the torque correction value Ta calculated in the engine correction command value calculation process (S23), to the engine control unit 25. Thus, the engine control unit 25 controls the engine 13 in accordance with the torque correction value Ta.

If the determination in step S21 is that the hill assist is not in execution (S21:No), the hill assist control device 30 executes a hill assist stop process (S25). To be exact, the brake control unit 37 zeroes the brake pressure command value Psc. This makes the braking force Fb of the brake device 15 drop to zero.

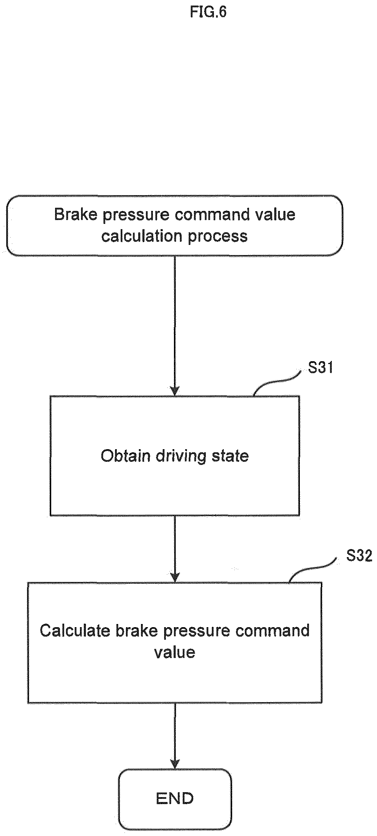

FIG. 6 is a flowchart of the brake pressure command value calculation process shown in FIG. 5.

In the brake pressure command value calculation process, the brake control unit 37 of the hill assist control device 30 obtains a driving state (S31). The brake control unit 37 obtains an estimate value of the driving force Fd from the driving force estimate unit 24. The brake control unit 37 obtains the amount Ob of operation on the brake operation part 17.

Then, the brake control unit 37 calculates a brake pressure command value (S32). The brake control unit 37 calculates the brake pressure Psc under which the brake device 15 is to be actuated, based on the minimum brake pressure Pmin set by the stop-time brake pressure setting unit 33 and the estimate value of the driving force Fd. In step S32, the brake control unit 37 temporarily stores the calculated brake pressure Psc in a storage device (not shown).

The brake pressure Psc is read out and outputted to the brake pressure adjustment device 40 in the command value update process (S24 in FIG. 5) which is executed later, so that the brake device 15 of the straddled vehicle is actuated. That is, the brake device 15 of the straddled vehicle is actuated based on the minimum brake pressure Pmin set by the stop-time brake pressure setting unit 33. The command value update process in step S24 (see FIG. 5) will be described later.

The brake control unit 37 calculates the brake pressure command value Psc based on the minimum brake pressure Pmin set by the stop-time brake pressure setting unit 33.

The brake control unit 37 sets, as an initial value of the brake pressure command value Psc, a brake pressure (Pmin+Pma) obtained by adding a predefined margin Pma to the minimum brake pressure Pmin. The margin Pma is, for example, 10% to 40% of the minimum brake pressure Pmin. It may be also acceptable that the margin Pma is out of the range of 10% to 40%.

The minimum brake pressure Pmin is set so as to produce a braking capacity Cb substantially equal to the grade resistance Rs. Since the brake pressure (Pmin+Pma) including the margin Pma is outputted as the command value Psc to the brake pressure adjustment device 40, a braking capacity Cb greater than the grade resistance Rs is produced. Thus, a situation where, for example, the straddled vehicle 10 moves rearward because of a variation in the total weight, etc., can be suppressed. This can aid in stability of the straddled vehicle 10 at a time of starting on a slope, for example.

The minimum brake pressure Pmin is a brake pressure set by the stop-time brake pressure setting unit 33 based on the pre-stop brake pressure Pbh. The pre-stop brake pressure Pbh reflects a friction coefficient of the brake device 15 of the straddled vehicle 10 at that time point.

For example, the friction coefficient is calculated by the friction coefficient acquisition unit 36. Here, the friction coefficient acquisition unit 36 calculates a friction coefficient only when the straddled vehicle 10 is braked in a substantially horizontal place. In a case where, for example, the straddled vehicle 10 continuously travels on a slope and then stops on the slope, the state of the brake device 15 at a time of stopping on the slope is not reflected in the friction coefficient acquired by the friction coefficient acquisition unit 36. In this case, the friction coefficient acquired by the friction coefficient acquisition unit 36 may sometimes be significantly different from the state of the brake device 15 at the time of stopping on the slope.

On the other hand, the minimum brake pressure Pmin that is set based on the pre-stop brake pressure Pbh reflects a friction coefficient at that time point. That is, appropriate setting of the minimum brake pressure Pmin of the brake device 15 that operates when no brake operation is performed is enabled. Thus, the margin Pma included in the minimum brake pressure Pmin+Pma of the brake device 15 that operates when no brake operation is performed can be reduced. This can suppress an excessive increase in the brake pressure (Pmin+Pma) of the brake device 15 that operates when no brake operation is performed as compared to the brake pressure Pmin required for keeping the straddled vehicle 10 stopped.

As a result, a time required for deactivation of the brake pressure is shortened at a time when the straddled vehicle 10 is started by the driver operating the accelerator. Thus, the driver is less likely to feel nonsmoothness or a rapid torque change. In addition, since the brake pressure of the brake device 15 that operates when no brake operation is performed is set appropriately, rearward movement of the straddled vehicle 10 on a slope is suppressed. Accordingly, the stability of the straddled vehicle 10 at a time of starting is enhanced.

In this embodiment, the minimum brake pressure Pmin is set based not only on the pre-stop brake pressure Pbh but also on the speed Vh at the time when the pre-stop brake pressure Pbh is acquired. Since the speed Vh is taken into account, precise setting of the minimum brake pressure Pmin is enabled. Accordingly, the brake pressure Psc of the brake device 15 that operates when no brake operation is performed is set more precisely.

In this embodiment, the minimum brake pressure Pmin is set based not only on the pre-stop brake pressure Pbh but also on the acceleration Ah corresponding to the speed Vh at the time when the pre-stop brake pressure Pbh is acquired. The pre-stop state of the brake device of the straddled vehicle 10 is more precisely reflected in the acceleration Ah at the time when the pre-stop brake pressure Pbh is acquired. This is because the braking force, which is a force, is closely related to the acceleration. Accordingly, the brake pressure Psc of the brake device 15 that operates when no brake operation is performed is set more precisely.

In this embodiment, the minimum brake pressure Pmin is set based not only on the pre-stop brake pressure Pbh but also on the total weight m. The acceleration and speed are influenced by the total weight. Accordingly, the setting based on the brake pressure Pbh and the total weight m enables the brake pressure Psc of the brake device 15 that operates when no brake operation is performed to be set more precisely.

In this embodiment, the minimum brake pressure Pmin is set based not only on the pre-stop brake pressure Pbh but also on the driving force Fdh obtained when the vehicle is stopped by braking. Accordingly, the brake pressure of the brake device 15 that operates when no brake operation is performed is set more precisely.

When the straddled vehicle 10 stopped on a slope starts, the driver increases the amount Oa of operation on the accelerator of the accelerator operation part 16. As a result, the driving force Fd rises from zero.

The brake control unit 37 is operable to deactivate the braking force Fb occurring in the brake device 15 in accordance with an increase in the driving force Fd.

In the brake pressure command value calculation process in step S32 mentioned above, the brake control unit 37 decreases the brake pressure command value Psc if the estimate value of the driving force Fd exceeds the braking capacity Cb. The braking capacity Cb is acquired based on the brake pressure command value Psc and the estimate value of the friction coefficient M.

In more detail, the brake control unit 37 gradually decreases the brake pressure command value Psc over time. For example, the brake control unit 37 decreases the brake pressure command value Psc at a predefined rate of decrease. The brake control unit 37 decreases the brake pressure command value Psc to zero.

A decrease in the brake pressure command value Psc causes a decrease in the brake pressure. The braking capacity Cb decreases accordingly. The braking capacity Cb is a limit of the braking force Fb. Therefore the braking capacity Cb becomes equal to the braking force Fb in the course of its decrease over time, and then the braking capacity Cb further decreases so that the braking force Fb decreases along with the decrease in the braking capacity Cb.

As a result, the balance among the driving force Fd, the braking force Fb, and the grade resistance Rs is lost. Thus, the straddled vehicle 10 starts. The straddled vehicle 10 starts without moving rearward.

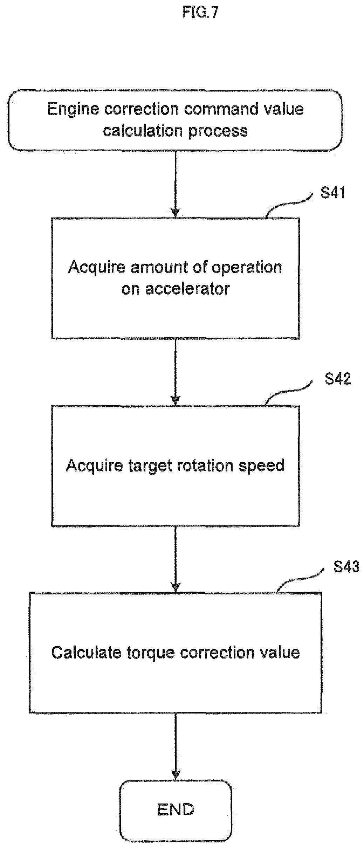

FIG. 7 is a flowchart of the engine correction command value calculation process shown in FIG. 5.

In the engine correction command value calculation process, a target rotation speed is acquired, the target rotation speed being a speed that stabilizes the operation of the engine 13 in a case where the straddled vehicle 10 starts on a slope.

In the engine correction command value calculation process, the engine torque correction unit 38 acquires the amount of operation on the accelerator. To be exact, the engine torque correction unit 38 acquires the amount Oa of operation on the accelerator operation part 16 (S41).

Then, the engine torque correction unit 38 acquires the target rotation speed (S42). To be exact, the engine torque correction unit 38 calculates the target rotation speed of the engine 13 based on the amount Oa of operation on the accelerator operation part 16.

Then, the engine torque correction unit 38 calculates a torque correction value (S43). In a case where a load on the engine 13 increases, the engine torque correction unit 38 calculates such a torque correction value Ta that the engine 13 rotates at the target rotation speed based on the amount Oa of operation. The torque correction value Ta thus calculated is temporarily stored in a storage device (not shown).

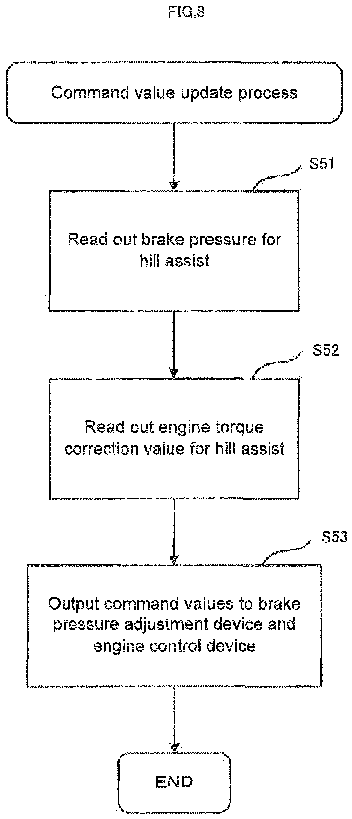

FIG. 8 is a flowchart of the command value update process shown in FIG. 5.

In the command value update process, the brake control unit 37 of the hill assist control device 30 reads out the brake pressure command value Psc calculated in step S32 from the storage device (not shown) again (S51).

The engine control unit 25 reads out the torque correction value Ta acquired in step S43 from the storage device (not shown) (S52). The engine control unit 25 corrects the amount Oa of operation on the accelerator of the accelerator operation part 16 in accordance with the torque correction value Ta, and thus the engine control unit 25 calculates an output torque target of the engine 13.

After step S51 and S52, the brake control unit 37 outputs the read-out brake pressure Psc to the brake pressure adjustment device 40 (S53). This allows the brake control unit 37 to actuate the brake device 15 based on the brake pressure command value Psc calculated in step S32. The engine control unit 25 outputs the output torque target. To be exact, the engine control unit 25 controls the engine 13 such that the engine 13 outputs a torque corresponding to the output torque target. Accordingly, a torque corrected based on the torque correction value Ta is outputted from the engine 13. As a result, the rotation speed of the engine 13 is stabilized at a time of starting on a slope.

A braking force control performed by the brake control unit 37 in the brake pressure command value calculation process (S32) shown in FIG. 6 will now be described.

In step S32, the brake control unit 37 calculates the brake pressure Psc under which the brake device 15 is to be actuated, based on the minimum brake pressure Pmin and the estimate value of the driving force Fd.

The minimum brake pressure Pmin is a brake pressure calculated so as to produce a braking capacity Cb substantially equal to the grade resistance Rs. In a case of the driving force Fd being zero, the brake control unit 37 of this embodiment calculates, as the brake pressure command value Psc, the brake pressure (Pmin+Pma) which is obtained by adding the margin Pma to the minimum brake pressure Pmin. When the brake device 15 operates under the brake pressure (Pmin+Pma), a braking capacity Cb occurring in the brake device 15 is greater than the grade resistance Rs. Thus, the upper limit of the magnitude of the braking force Fb is higher than the grade resistance Rs.

The straddled vehicle 10 is not provided with a door, etc. It therefore is easy for a passenger to get on or off the vehicle while the vehicle is stopped, for example. That is, the straddled vehicle 10 in a stopped state is likely to have a variation in the grade resistance due to a variation in the total weight. Moreover, an error may be present in the calculated brake pressure Psc.

This embodiment, in which the braking capacity Cb has a margin relative to the grade resistance Rs, suppresses a situation where the straddled vehicle 10 moves rearward due to the error or the variation in the grade resistance, for example. This can aid in stability of the straddled vehicle 10 at a time of starting on a slope, for example.

The minimum brake pressure Pmin reflects the friction coefficient of the brake at a time when the straddled vehicle 10 is stopped on a slope by braking. This is why the minimum brake pressure Pmin that reflects the brake state at a time of stopping operation and that is accurate relative to the grade resistance Rs is acquired.

Therefore, the margin Pma included in the brake pressure Psc (Pmin+Pma) under which the brake device 15 is actuated can be reduced.

In this embodiment, upon determination that the estimate value of the driving force Fd exceeds the grade resistance Rs, the brake control unit 37 decreases the brake pressure under which the brake device 15 is actuated. More specifically, if the estimate value of the driving force Fd exceeds the grade resistance Rs, the brake control unit 37 gradually decreases the brake pressure over time.

After the driving force Fd exceeds the grade resistance Rs as a result of the driver operating the accelerator operation part 16, the braking capacity Cb decreases over time. The braking capacity Cb becomes equal to the magnitude of the braking force Fb, and then the braking force Fb decreases as the braking capacity Cb decreases. The straddled vehicle 10 starts when the driving force Fd exceeds the sum of the magnitudes of the grade resistance Rs and the braking force Fb.

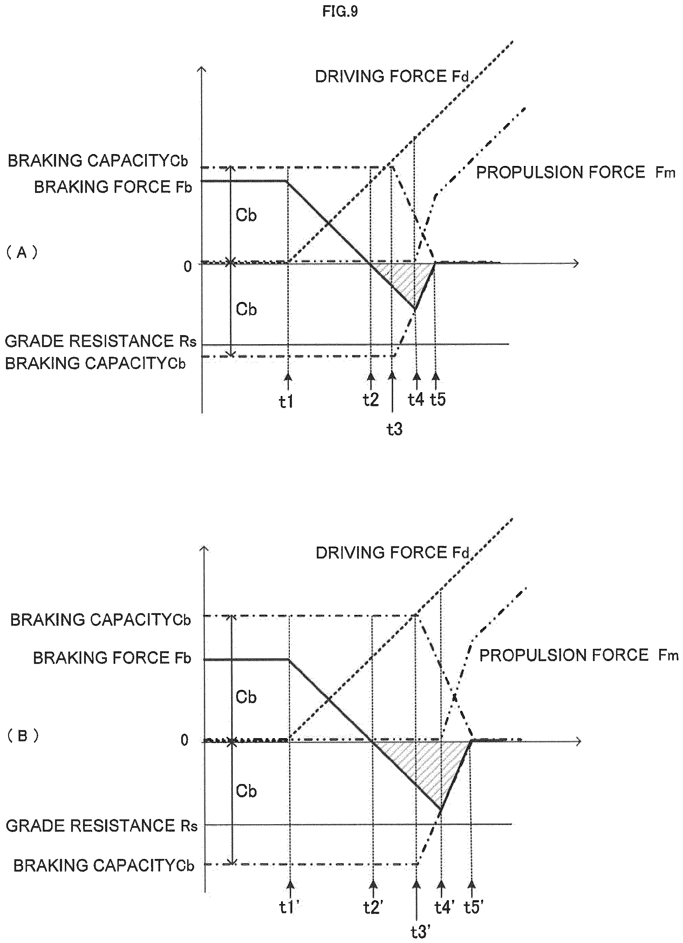

FIG. 9(A) is a graph showing changes in forces that act on the straddled vehicle 10 starting on a slope under control of the engine control device 20 and the hill assist control device 30 according to this embodiment. The horizontal axis of the graph represents time. The vertical axis of the graph represents the forces. In the graph, the force traveling frontward of the straddled vehicle 10, which means the force traveling toward the upside of the slope, is indicated as a positive force.

The graph of FIG. 9(A) shows a period from when the straddled vehicle 10 is stopped on a slope to when the straddled vehicle 10 starts. No brake operation is performed by the driver. In the graph of FIG. 9(A), to facilitate understanding of the relationship among the forces, a rolling resistance, an air resistance, and the like, are ignored and the relationship among the forces is shown in outline. Since the rolling resistance and the air resistance are significantly lower than the grade resistance, their influence is negligible.

The grade resistance Rs is a force directed rearward of the straddled vehicle 10. The hill assist control device 30 of this embodiment is configured to, when the straddled vehicle 10 is stopped on a slope, control the brake pressure adjustment device 40 such that the brake device 15 produces the braking force Fb.

In more detail, the brake device 15 is actuated so that a braking capacity Cb corresponding to the brake pressure command value Psc (see FIG. 3) occurs. The braking force Fb is produced with the upper limit thereof being defined by the braking capacity Cb. The braking force Fb in the stopped state occurs as a reactive force against the combined force of forces acting on the straddled vehicle 10 except the braking force Fb. Before time t1, the driving force Fd is zero, and therefore the braking force Fb occurs as a reactive force against the grade resistance Rs. A state prior to time t1 corresponds to the state shown in FIG. 2(A).

The brake pressure Psc outputted from the brake control unit 37 of the hill assist control device 30 is the sum Pmin+Pma of the minimum brake pressure Pmin and the margin Pma. The minimum brake pressure Pmin is a brake pressure that the stop-time brake pressure setting unit 33 has set so as to produce a braking capacity Cb substantially equal to the grade resistance Rs. The minimum brake pressure Pmin is set based on the pre-stop brake pressure Pbh. The pre-stop brake pressure Pbh reflects a friction coefficient of the brake device of the straddled vehicle at that time point. Thus, the margin Pma to be added to the minimum brake pressure Pmin can be reduced. This can suppress an excessive increase in the brake pressure (Pmin+Pma) of the brake device that operates when no brake operation is performed as compared to the brake pressure Pmin required for keeping the straddled vehicle stopped. That is, an excessive increase in the braking capacity Cb as compared to the grade resistance Rs can be suppressed.

The hill assist control device 30 adjusts the brake pressure Psc (see FIG. 3), to control the braking capacity Cb in the stopped state.

Here, the braking force Fb whose limit is defined by the braking capacity Cb occurs both frontward and rearward of the straddled vehicle 10. This is why the braking capacity Cb is indicated in both of the positive and negative regions in the graph of FIG. 9(A).

At time t1, the driver starts to operate the accelerator operation part 16. After time t1, the amount of operation on the accelerator operation part 16 gradually increases over time. Along with this, the driving force Fd increases. A state after time t1 corresponds to the state shown in FIG. 2(B).

At time t1, the driver operates the accelerator operation part 16, so that the driving force Fd rises from zero. While the straddled vehicle 10 is stopped, the driving force Fd, the braking force Fb, and the grade resistance Rs are balanced as shown in FIG. 2(B). Therefore, the braking force Fb decreases along with the increase in the driving force Fd.

At time t2, the driving force Fd becomes substantially equal to the grade resistance Rs, and at this time, the braking force Fb becomes substantially zero. After time t2, the driving force Fd further increases, so that the braking force Fb has a negative value. The braking force Fb disturbs the straddled vehicle 10 in traveling forward with the driving force Fd.

When the driving force Fd exceeds the braking capacity Cb, the brake control unit 37 decreases the brake pressure command value Psc. The brake control unit 37 decreases the brake pressure command value Psc over time. The braking capacity Cb decreases along with the decrease in the brake pressure command value Psc. At time t3, the braking capacity Cb becomes equal to the braking force Fb. After time t3, the absolute value of the braking force Fb decreases along with the decrease in the braking capacity Cb.

At time t4, the decreasing braking capacity Cb becomes equal to the braking force Fb. Then, the braking capacity Cb further decreases, so that the braking force Fb decreases along with the decrease in the braking capacity Cb.

When the driving force Fd exceeds the sum of the magnitudes of the grade resistance Rs and the braking force Fb at time t4, a propulsion force Fm occurs. As a result, the straddled vehicle 10 starts.

At time t5, the production of the braking capacity Cb and the braking force Fb stops.

[Comparative Example]

FIG. 9(B) is a graph showing changes in forces acting in a comparative example which is different from this embodiment in terms of the function of the stop-time brake pressure setting unit.

In the comparative example shown in the graph of FIG. 9(B), the stop-time brake pressure setting unit sets the brake pressure not based on the pre-stop brake pressure. For example, the stop-time brake pressure setting unit of the comparative example estimates the grade angle and the total weight based on a signal supplied from a load sensor. In the comparative example, the grade resistance is calculated based on the estimated total weight and angle. In the comparative example, the brake device is actuated based on the calculated grade resistance. In the comparative example, the brake pressure under which the brake device is actuated does not reflect a variation in the braking capacity. In addition, there is a risk that a large error might be present in the grade angle and weight estimated based on the load sensor which is mounted on the straddled vehicle. Thus, there is a risk that a large error might be present in the calculated grade resistance, too.

In the comparative example, the braking force required for keeping the vehicle stopped is set high so as to tolerate an error and a variation in the braking capacity Cb. As a result, the braking capacity Cb shown in FIG. 9(B) is excessively high relative to the grade resistance Rs.

Therefore, in the comparative example, a prolonged time is taken from when the braking capacity Cb starts to decrease at time t3' to when the production of the braking capacity Cb stops at time t5'.

In addition, a prolonged time is taken from when the driving force Fd starts to increase in response to the driver's operation at time t1' to when the driving force Fd exceeds the braking capacity Cb at time t3'. As a result, a prolonged time is taken from when the braking force Fb becomes zero at time t2' to when the braking capacity Cb starts to decrease.

In this embodiment shown in the graph of FIG. 9(A), on the other hand, the brake pressure under which the brake device is actuated when no brake operation is performed reflects a variation in the braking capacity. Therefore, a difference between the braking capacity Cb and the grade resistance Rs is smaller as compared to the comparative example shown in FIG. 9(B).

This is why a shortened time is taken from when the braking capacity Cb starts to decrease at time t3 to when the production of the braking capacity Cb stops at time t5 as compared to the comparative example.

In addition, a shortened time is taken from when the driving force Fd starts to increase in response to the driver's operation at time t1 to when the driving force Fd exceeds the braking capacity Cb at time t3. As a result, a shortened time is taken from when the braking force Fb becomes zero at time t2 to when the braking capacity Cb starts to decrease.

In the graphs of FIG. 9(A) and FIG. 9(B), a region where a negative braking force Fb occurs is hatched. The negative braking force Fb acts so as to disturb the straddled vehicle 10 in starting with the driving force Fd. The occurrence of the negative braking force Fb makes the driver feel nonsmoothness in starting the straddled vehicle. In particular, the straddled vehicle has a lower weight than that of, for example, a four-wheeled automobile. Moreover, a driver normally places his/her feet on a ground surface at a time of starting the straddled vehicle 10. Therefore, the driver of the straddled vehicle 10 is likely to feel movement of the straddled vehicle 10 sensitively. The driver of the straddled vehicle 10 feels nonsmoothness or a rapid torque change more sensitively.

In this embodiment shown in FIG. 9(A), the negative braking force Fb occurs in a period from time t2 to time t5. In this embodiment, a difference between the braking capacity Cb and the grade resistance Rs is smaller as compared to the comparative example. This can suppress an excessive increase in the brake pressure Psc of the brake device 15 that operates when no brake operation is performed as compared to a brake pressure for producing a braking force Fb having a magnitude balanced with the grade resistance Rs. As a result, a time required for deactivating the brake pressure is shortened. The period (t2 to t5) in which the negative braking force Fb occurs is shorter than the period (t2' to t5' in FIG. 9(B)) in which the negative braking force Fb occurs in the comparative example. Therefore, in this embodiment, it is easy that the start of the straddled vehicle 10 follows the driver's intention to start, thus suppressing nonsmoothness or a rapid torque change felt by the driver.

In this embodiment, the braking capacity Cb is greater than the grade resistance Rs, and a difference between the braking capacity Cb and the grade resistance Rs is smaller as compared to the comparative example. Thus, the brake pressure Psc of the brake device 15 that operates when no brake operation is performed is set appropriately. This can suppress rearward movement of the straddled vehicle on a slope.

[Second Embodiment]

Next, a second embodiment of the present teaching will be described.

The second embodiment of the present teaching is different from the first embodiment in terms of the contents of the processing in the brake pressure command value calculation process (S32) shown in FIG. 6. The other points of the second embodiment are the same as those of the first embodiment. Therefore, in the description of the second embodiment, the same drawings and the same reference signs as used in the description of the first embodiment will be used.

In the brake pressure command value calculation process (S32), the brake control unit 37 of the first embodiment gradually decreases the brake pressure command value Psc if the estimate value of the driving force Fd exceeds the braking capacity Cb.

In the brake pressure command value calculation process (S32), the brake control unit 37 of the second embodiment outputs a brake pressure command value Psc such that the brake pressure command value Psc of the brake device 15 decreases while substantially following a decrease in the braking force Fb.

When the straddled vehicle 10 is stopped, the braking force Fb, the grade resistance Rs, and the driving force Fd are balanced. Therefore, the braking force Fb decreases along with an increase in the driving force Fd.

The brake control unit 37 of this embodiment adjusts the brake pressure command value Psc such that the brake pressure command value Psc of the brake device 15 decreases while substantially following the increase in the driving force Fd. The brake control unit 37, for example, decreases the brake pressure command value Psc by a decrement corresponding to the amount of increase in the driving force Fd.

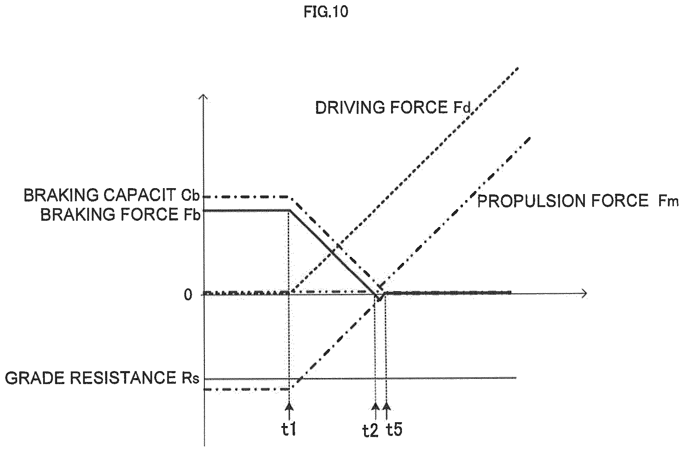

FIG. 10 is a graph showing changes in forces that act on the straddled vehicle 10 starting on a slope under control of the engine control device 20 and the hill assist control device 30 according to the second embodiment.

In this embodiment, the brake pressure command value Psc of the brake device 15 decreases while substantially following a decrease in the braking force Fb. Thus, the braking capacity Cb decreases along with an increase in the driving force Fd. Accordingly, the period (t2 to t5) in which the negative braking force Fb occurs is further shortened as compared to the first embodiment shown in FIG. 9(A). Therefore, this embodiment enables a smooth start with further suppression of nonsmoothness felt by the driver.

The embodiments described above illustrate the stop-time brake pressure setting unit 33 that calculates a grade resistance Rs and calculates a minimum brake pressure Pmin based on the grade resistance Rs, in order to acquire the minimum brake pressure Pmin for stopping the straddled vehicle 10. However, this does not limit the present teaching. For example, the stop-time brake pressure setting unit may directly calculate a brake pressure for stopping the straddled vehicle without calculating the grade resistance.

In addition, the stop-time brake pressure setting unit may acquire a brake pressure for stopping the straddled vehicle by reading out a value from a table in which data is preliminarily associated.

The embodiments described above illustrate the stop-time brake pressure setting unit 33 that calculates the minimum brake pressure Pmin with direct use of the total weight m, the acceleration Ah, the driving force Fd, and the Fb. However, this does not limit the present teaching.

The stop-time brake pressure setting unit may acquire a brake pressure for stopping the straddled vehicle without direct use of the total weight obtained by detection. For example, the stop-time brake pressure setting unit may acquire a brake pressure for stopping the straddled vehicle with the total weight being a fixed value.

In addition, the stop-time brake pressure setting unit may acquire the brake pressure without direct use of the pre-stop driving force Fdh. For example, the stop-time brake pressure setting unit may acquire a brake pressure for stopping the straddled vehicle with the pre-stop driving force being a fixed value.

Moreover, the stop-time brake pressure setting unit may acquire a brake pressure without using the pre-stop acceleration. For example, the stop-time brake pressure setting unit may acquire a brake pressure by directly using the speed instead of the acceleration.

Furthermore, the stop-time brake pressure setting unit may acquire a brake pressure without direct use of the pre-stop acceleration and speed.

The embodiments described above illustrate the brake control unit 37 that actuates the brake device when no brake operation is performed by the driver. However, this does not limit the present teaching. The brake control unit may actuate the brake device by, for example, detecting a deactivation or decrease in a brake operation performed by the driver. Alternatively, the brake control unit may actuate the brake device by, for example, detecting a brake operation performed by the driver.

The embodiments described above illustrate that each of the engine control device 20 and the hill assist control device 30 includes a central processing unit and a storage device. However, this does not limit the present teaching. The control device may be configured as a wired logic, for example.

The embodiments illustrate calculating the respective values. Here, the meaning of "calculating" is not limited to calculating a mathematical expression with direct use of inputted values. The meaning of calculating also includes, for example, reading out a value corresponding to an inputted value by using a map or table in which a plurality of numbers are associated with each other.

The embodiments illustrate the brake device 15 formed of a disc brake. However, this does not limit the present teaching. The brake device may be formed of a drum brake, for example.

The embodiments illustrate the brake pressure acquisition unit 35 that acquires a brake pressure based on a hydraulic pressure of a hydraulic fluid. However, this does not limit the present teaching. The brake pressure acquisition unit may acquire a brake pressure based on, for example, the amount of operation on the brake operation part.

In the embodiments, the minimum brake pressure Pmin that produces a braking capacity Cb substantially equal to the grade resistance Rs is illustrated as the brake pressure for stopping the straddled vehicle 10. However, this does not limit the present teaching. For example, the brake pressure for stopping the straddled vehicle may be a brake pressure that produces a braking capacity greater than the grade resistance.

The embodiments illustrate: the brake pressure acquisition unit 35 that acquires a pre-stop brake pressure in a case of the straddled vehicle 10 stopping on a slope; and the brake control unit 37 that actuates the brake device 15 when the straddled vehicle 10 is on a slope. However, this does not limit the present teaching. For example, the brake pressure acquisition unit may acquire a pre-stop brake pressure in a case of the straddled vehicle stopping in a substantially horizontal place. The brake control unit may actuate the brake device when the straddled vehicle is in a substantially horizontal place. The straddled vehicle is stabilized in, for example, loading and unloading, etc.

Reference Signs List

| | |
|---|---|
| 10 | straddled vehicle |
| 15 | brake device |
| 17 | brake operation part |
| 20 | engine control device |
| 22 | total weight acquisition unit |
| 24 | driving force estimate unit |
| 30 | hill assist control device |
| 32A | vehicle speed acquisition unit |
| 32B | acceleration acquisition unit |
| 33 | stop-time brake pressure setting unit |
| 34 | driving force acquisition unit |
| 35 | brake pressure acquisition unit |
| 37 | brake control unit |
| 40 | brake pressure adjustment device |
| Ah | acceleration |
| Fdh | driving force |
| Pbh | brake pressure |
| Psc | brake pressure |
| Rs | grade resistance |
| Vh | speed |

## Claims

**1.** A control device (30) for straddled vehicle (10), the control device (30) comprising:

a brake pressure acquisition unit (35) configured to acquire a pre-stop brake pressure when the straddled vehicle (10) is stopped by braking; a total weight acquisition unit (22) configured to acquire an estimate value of a total weight of the straddled vehicle (10); a stop-time brake pressure setting unit (33) configured to set a brake pressure for stopping the straddled vehicle (10) based at least on the pre-stop brake pressure acquired by the brake pressure acquisition unit (35) and the estimate value of the total weight of the straddled vehicle (10) acquired by the total weight acquisition unit (22); and a brake control unit (37) configured to, when no brake operation is performed by a driver, actuate a brake device (15) of the straddled vehicle (10) based on the brake pressure set by the stop-time brake pressure setting unit (33).

**2.** The control device (30) for straddled vehicle (10) according to claim 1, the control device (30) further comprising a vehicle speed acquisition unit (32A) configured to acquire a speed of the straddled vehicle (10) at a time when the pre-stop brake pressure is acquired, the stop-time brake pressure setting unit (33) being configured to set a brake pressure for stopping the straddled vehicle (10) based at least on the pre-stop brake pressure and a speed at a time when the pre-stop brake pressure is acquired.

**3.** The control device (30) for straddled vehicle (10) according to claim 2, the control device (30) further comprising an acceleration acquisition unit (32B) configured to acquire an acceleration of the straddled vehicle (10) based on a speed of the straddled vehicle (10) acquired by the vehicle speed acquisition unit (32A), the stop-time brake pressure setting unit (33) being configured to set a brake pressure for stopping the straddled vehicle (10) based at least on the pre-stop brake pressure and an acceleration corresponding to a speed at a time when the pre-stop brake pressure is acquired.

**4.** A straddled vehicle (10) comprising:

a wheel (12) of the straddled vehicle (10); the control device (30) according to any one of claims 1 to 3; and a brake device (15) that is actuated by a brake control unit (37) of the control device (30).

## Patentansprüche

**1.** Eine Steuervorrichtung (30) für ein rittlings zu fahrendes Fahrzeug (10), wobei die Steuervorrichtung (30) folgende Merkmale aufweist:

eine Bremsdruck-Erfassungseinheit (35), die konfiguriert ist zum Erfassen eines Vor-Stopp-Bremsdrucks, wenn das rittlings zu fahrende Fahrzeug (10) durch Bremsen gestoppt wird; eine Gesamtgewicht-Erfassungseinheit (22), die konfiguriert ist zum Erfassen eines Schätzwerts eines Gesamtgewichts des rittlings zu fahrenden Fahrzeugs (10); eine Stoppzeit-Bremsdruck-Einstelleinheit (33), die konfiguriert ist zum Einstellen eines Bremsdrucks zum Stoppen des rittlings zu fahrenden Fahrzeugs (10) basierend auf zumindest dem Vor-Stopp-Bremsdruck, der durch die Bremsdruck-Erfassungseinheit (35) erfasst wird, und dem Schätzwert des Gesamtgewichts des rittlings zu fahrenden Fahrzeugs (10), der durch die Gesamtgewicht-Erfassungseinheit (22) erfasst wird; und eine Bremssteuereinheit (37), die konfiguriert ist zum, wenn kein Bremsvorgang durch einen Fahrzeugführer ausgeführt wird, Betätigen einer Bremsvorrichtung (15) des rittlings zu fahrenden Fahrzeugs (10) basierend auf dem Bremsdruck, der durch die Stoppzeit-Bremsdruck-Einstelleinheit (33) eingestellt wird.

**2.** Die Steuervorrichtung (30) für ein rittlings zu fahrendes Fahrzeug (10) gemäß Anspruch 1, wobei die Steuervorrichtung (30) ferner eine Fahrzeuggeschwindigkeits-Erfassungseinheit (32A) aufweist, die konfiguriert ist zum Erfassen einer Geschwindigkeit des rittlings zu fahrenden Fahrzeugs (10) zu einem Zeitpunkt, wenn der Vor-Stopp-Bremsdruck erfasst wird, wobei die Stoppzeit-Bremsdruck-Einstelleinheit (33) konfiguriert ist zum Einstellen eines Bremsdrucks zum Stoppen des rittlings zu fahrenden Fahrzeugs (10) basierend auf zumindest dem Vor-Stopp-Bremsdruck und einer Geschwindigkeit zu einem Zeitpunkt, wenn der Vor-Stopp-Bremsdruck erfasst wird.

**3.** Die Steuervorrichtung (30) für ein rittlings zu fahrendes Fahrzeug (10) gemäß Anspruch 2, wobei die Steuervorrichtung (30) ferner eine Beschleunigungserfassungseinheit (32B) aufweist, die konfiguriert ist zum Erfassen einer Beschleunigung des rittlings zu fahrenden Fahrzeugs (10) basierend auf einer Geschwindigkeit des rittlings zu fahrenden Fahrzeugs (10), die durch die Fahrzeuggeschwindigkeits-Erfassungseinheit (32A) erfasst wird, wobei die Stoppzeit-Bremsdruck-Einstelleinheit (33) konfiguriert ist zum Einstellen eines Bremsdrucks zum Stoppen des rittlings zu fahrenden Fahrzeugs (10) basierend auf zumindest dem Vor-Stopp-Bremsdruck und einer Beschleunigung, die einer Geschwindigkeit zu einem Zeitpunkt entspricht, wenn der Vor-Stopp-Bremsdruck erfasst wird.

4. Ein rittlings zu fahrendes Fahrzeug (10), das folgende Merkmale aufweist:

   ein Rad (12) des rittlings zu fahrenden Fahrzeugs (10);
   die Steuervorrichtung (30) gemäß einem der Ansprüche 1 bis 3 und
   eine Bremsvorrichtung (15), die durch eine Bremssteuereinheit (37) der Steuervorrichtung (30) betätigt wird.

**Revendications**

1. Dispositif de commande (30) pour véhicule du type à selle (10), le dispositif de commande (30) comprenant:

   une unité d'acquisition de pression de freinage (35) configurée pour acquérir une pression de freinage de pré-arrêt lorsque le véhicule du type à selle (10) est arrêté par freinage;
   une unité d'acquisition de poids total (22) configurée pour acquérir une valeur estimée d'un poids total du véhicule du type à selle (10);
   une unité de réglage de pression de freinage au moment de l'arrêt (33) configurée pour régler une pression de freinage pour arrêter le véhicule du type à selle (10) sur base au moins de la pression de freinage de pré-arrêt acquise par l'unité d'acquisition de pression de freinage (35) et de la valeur estimée du poids total du véhicule du type à selle (10) acquis par l'unité d'acquisition de poids total (22); et
   une unité de commande de freinage (37) configurée pour actionner, lorsqu'il n'est pas effectué d'opération de freinage par un conducteur, un dispositif de freinage (15) du véhicule du type à selle (10) sur base de la pression de freinage réglée par l'unité de réglage de pression de freinage au moment de l'arrêt (33).

2. Dispositif de commande (30) pour véhicule du type à selle (10) selon la revendication 1, le dispositif de commande (30) comprenant par ailleurs une unité d'acquisition de vitesse de véhicule (32A) configurée pour acquérir une vitesse du véhicule du type à selle (10) à un moment où est acquise la pression de freinage de pré-arrêt, l'unité de réglage de pression de freinage au moment de l'arrêt (33) étant configurée pour régler une pression de freinage pour arrêter le véhicule du type à selle (10) sur base au moins de la pression de freinage de pré-arrêt et d'une vitesse à un moment où est acquise la pression de freinage de pré-arrêt.

3. Dispositif de commande (30) pour véhicule du type à selle (10) selon la revendication 2, le dispositif de commande (30) comprenant par ailleurs une unité d'acquisition d'accélération (32B) configurée pour acquérir une accélération du véhicule du type à selle (10) sur base d'une vitesse du véhicule du type à selle (10) acquise par l'unité d'acquisition de vitesse de véhicule (32A), l'unité de réglage de pression de freinage au moment de l'arrêt (33) étant configurée pour régler une pression de freinage pour arrêter le véhicule du type à selle (10) sur base au moins de la pression de freinage de pré-arrêt et d'une accélération correspondant à une vitesse à un moment où est acquise la pression de freinage de pré-arrêt.

4. Véhicule du type à selle (10), comprenant:

   une roue (12) du véhicule du type à selle (10);
   le dispositif de commande (30) selon l'une quelconque des revendications 1 à 3; et
   un dispositif de freinage (15) qui est actionné par une unité de commande de freinage (37) du dispositif de commande (30).

FIG.1

FIG.2

FIG.3

Hill assist execution determination process

Acquire data — S11

Acquire minimum brake pressure — S12

S13

Hill assist mode? — NO

YES

S14

Slope? — NO

YES

S15

Vehicle is stopped? — NO(Moving)

YES(Stopped)

Determine to execute hill assist — S16

S18

Start is completed? — YES

NO

Set minimum brake pressure — S17

Determine to stop hill assist — S19

END

FIG.5

Hill assist process

S21 — Hill assist is in execution?

NO → S25 Hill assist stop process → END

YES

S22 — Brake pressure command value calculation process

S23 — Engine correction command value calculation process

S24 — Command value update process

END

FIG.6

```
┌─────────────────────────────────────┐
│   Brake pressure command value       │
│       calculation process            │
└─────────────────────────────────────┘
                    │
                    ▼                      S31
        ┌─────────────────────────┐
        │                         │
        │    Obtain driving state  │
        │                         │
        └─────────────────────────┘
                    │
                    ▼                      S32
        ┌─────────────────────────┐
        │                         │
        │  Calculate brake pressure command │
        │          value          │
        │                         │
        └─────────────────────────┘
                    │
                    ▼
              ┌───────────┐
              │    END    │
              └───────────┘
```

FIG.7

```
┌─────────────────────────────────┐
│  Engine correction command value │
│       calculation process        │
└─────────────────────────────────┘
                 │
                 ▼              S41
      ┌────────────────────────┐
      │  Acquire amount of      │
      │   operation             │
      │   on accelerator        │
      └────────────────────────┘
                 │
                 ▼              S42
      ┌────────────────────────┐
      │                        │
      │ Acquire target rotation │
      │        speed           │
      └────────────────────────┘
                 │
                 ▼              S43
      ┌────────────────────────┐
      │                        │
      │ Calculate torque        │
      │   correction value      │
      └────────────────────────┘
                 │
                 ▼
           ┌──────────┐
           │   END    │
           └──────────┘
```

FIG.8

```
┌──────────────────────────────────────┐
│      Command value update process     │
└──────────────────────────────────────┘
                    │
                    ▼                    S51
        ┌───────────────────────┐
        │  Read out brake pressure for │
        │         hill assist          │
        └───────────────────────┘
                    │
                    ▼                    S52
        ┌───────────────────────┐
        │    Read out engine torque    │
        │ correction value for hill assist │
        └───────────────────────┘
                    │
                    ▼                    S53
        ┌───────────────────────┐
        │ Output command values to brake │
        │ pressure adjustment device and │
        │       engine control device    │
        └───────────────────────┘
                    │
                    ▼
              ┌───────────┐
              │    END    │
              └───────────┘
```

FIG.9

(A)

BRAKING CAPACITY Cb
BRAKING FORCE Fb

DRIVING FORCE Fd

PROPULSION FORCE Fm

Cb

0

Cb

GRADE RESISTANCE Rs
BRAKING CAPACITY Cb

t1   t2  t4 t5

t3

(B)

BRAKING CAPACITY Cb

BRAKING FORCE Fb

DRIVING FORCE Fd

PROPULSION FORCE Fm

Cb

0

Cb

GRADE RESISTANCE Rs

BRAKING CAPACITY Cb

t1'   t2'   t4' t5'

t3'

FIG.10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102008026531 A1

- JP 2011230667 A